# EUROPEAN PATENT SPECIFICATION

(11) **EP 3 574 039 B1**
(45) Date of publication and mention of the grant of the patent: **27.05.2020**
(21) Application number: 18701041.8
(22) Date of filing: 23.01.2018
(51) Int. Cl.: C08H 7/00, C08H 8/00, C08L 97/00

(54) **FUNCTIONALIZED LIGNIN AS A DISPERSING AGENT FOR RUBBER COMPOUNDS**
FUNKTIONALISIERTES LIGNIN ALS DISPERGIERMITTEL FÜR KAUTSCHUKVERBINDUNGEN
LIGNINE FONCTIONNALISÉE UTILISÉE EN TANT QU'AGENT DISPERSANT POUR DES COMPOSÉS DE CAOUTCHOUC

(30) Priority: 24.01.2017 IT 201700007103
(43) Date of publication of application: 04.12.2019
(73) Proprietor: Bridgestone Corporation, Tokyo 104-8340 (JP)
(72) Inventor: DI RONZA, Raffaele, 00128 Roma (IT); AURISICCHIO, Claudia, 00128 Roma (IT); CALIANO, Ludovica, 00128 Roma (IT); CRESTINI, Claudia, 00100 Roma (IT)
(74) Representative: Marchetti, Alessio
(86) International application number: PCT/EP2018/051541
(87) International publication number: WO 2018/138075

(56) References cited:
- WO-A1-2014/097108
- WO-A1-2015/114610
- WO-A1-2016/072915
- WO-A1-2016/204682
- GB-A- 730 865

## Description

The present invention relates to functionalized lignin to be used as a dispersing agent for rubber compounds.

The usage of lignin as a dispersing agent within rubber compounds for making pneumatic tyre parts has long been known.

Lignin is an organic substance that binds the cells and fibers that constitute wood and the lignified elements of plants. After cellulose, it is the most abundant renewable source of carbon on earth. Although it is not possible to define the precise structure of lignin as a chemical molecule, it is however possible to identify lignin as a polymeric structure based upon the following three phenylpropane units: -p-coumaryl alcohol; -coniferyl alcohol (4-hydroxy-3-methoxycinnamyl alcohol); -sinapyl alcohol (4-hydroxy-3,5-dimethoxycinnamyl alcohol). As can easily be inferred from the chemical structure of the core components of lignin, the latter is particularly rich in hydroxyl groups, mainly of the phenolic, alcohol or carboxylic type that render the same lignin particularly suitable for functionalization by means of esterification and/or etherification reactions.

Commercially, there exist different types of lignin which differ according to the different extraction process by which they were obtained. The Kraft process and the Sulphonation process constitute two examples of processes that are dedicated
to the extraction of lignin.

In particular, Kraft Lignin is a byproduct of the Kraft process that is utilized in order to chemically extract cellulose from wood. This is obtained by means of precipitation, lowering the pH of spent liquor from the Kraft process. The phenolic, alcohol and carboxyl hydroxyls are the main identifiable functional groups in Kraft lignin, while thiol groups are present to a lesser extent.

Contrary to this, the Sulphonation process leads to the obtaining of a lignin characterized by the presence of hydroxyls and high concentrations of sulphonic groups.

As may immediately be apparent to a person skilled in the art, the usage of lignin represents a significant advantage in terms of sustainability. In fact, lignin is a natural product that constitutes a by-product of wood in the manufacture of paper. In this respect, it should also be specified that the disposal of lignin represents a limiting stage within the paper production chain.

It has been experimentally found that the ability of lignin to disperse within a polymeric matrix is strongly influenced by the respective polarities.

As may seem obvious, if the dispersion of the lignin within the polymer base is improved, then consequently the properties of the compound as a whole, such as the rolling resistance and the abrasion resistance, are also necessarily improved.

The requirement was therefore felt for a solution that would guarantee an improved dispersion of the lignin in order to allow for more efficient usage thereof.

The object of the present invention is a lignin having a plurality of functionalizations of the general formula I 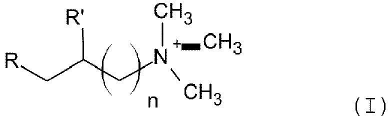
wherein R and R' are different from each other and selected between -OH and -OArLig and
n is an integer between 1 and 6.

Here and hereafter by -OArLig is meant a chemical group bonded to a phenolic hydroxyl of the lignin.

Preferably, R is -OArLig and R' is -OH.

Preferably, n is between 1 and 5.

Preferably, said functionalized lignin is derived from Kraft lignin.

Yet a further object of the present invention is the use of functionalized lignin of the general formula I as a dispersing agent within rubber compounds for the production of pneumatic tyre parts.

The following is an illustrative and non-limiting preparatory exemplary embodiment of the present invention.

### - Preparation of

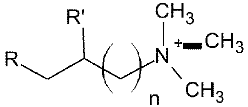

5 gr of Kraft lignin were dissolved in 50 mL of distilled water containing 1 eq of NaOH, calculated on the basis of the quantity of phenolic hydroxyl groups and carboxyl groups.

Once the solubilization of the lignin was complete, the resulting solution was heated to 50°C in a bath of oil under vigorous agitation.

1 eq of 2,3-epoxypropyltrimethylammonium chloride was added to the solution. The solution was left to react for 4 hours at 50°C, and then cooled to room temperature and acidified to pH 2-3 by means of the addition of hydrochloric acid. The solution was then centrifuged at 5000 rpm for 5 minutes. The solid residue was washed with acidified water and again centrifuged three times in order to remove the sodium chloride and the unreacted reagents. The product was then dissolved in dioxane and lyophilized.

³¹P-NMR was used to verify that the product made as described above has a functionalization of 50% of the phenolic hydroxyls of lignin.

The synthesis procedure described above was repeated utilizing a different quantity of 2,3-epoxypropyltrimethylammonium chloride. In particular, the synthesis was repeated utilizing 0.25 equivalents and 0.50 equivalents of 2,3-epoxypropyltrimethylammonium chloride.

The same synthesis procedures were then repeated utilizing lignin obtained by the Organosolv process rather than Kraft lignin.

From a ³¹P-NMR analysis of the products obtained it was possible to verify that when Kraft lignin is utilized the functionalization thereof increases linearly with the quantity of 2,3-epoxypropyltrimethylammonium chloride utilized, while the same thing does not happen with the lignin obtained by the Organosolv process.

The functionalized lignin prepared as described above was tested within rubber compounds in order to verify the properties thereof in terms of a dispersing agent.

To this end three rubber compounds were manufactured, the first of which (Compound A) does not comprise lignin, the second one (Compound B) comprises non-functionalized lignin and the third one (Compound C) comprises functionalized Kraft lignin.

The three compounds were prepared using the same standard procedure and differ only by the presence and type of lignin utilized as a dispersing agent.

Table I shows the compositions of the Compounds A - C.

**TABLE I**

| | A | B | C |
|---|---|---|---|
| S-SBR | 50.0 | | |
| E-SBR | 40.0 | | |
| BR | 10.0 | | |
| Silica | 88.0 | | |
| Silane binder | 11.0 | | |
| TMQ | 0.3 | | |
| Lignin | -- | 5.0 | -- |
| Substituted lignin | -- | -- | 5.0 |
| Zn Oxide | 1.7 | | |
| Sulfur | 1.5 | | |
| DPG | 1.8 | | |
| MBTS | 1.1 | | |
| TBBS | 1.75 | | |
| Stearic acid | 1.0 | | |

E-SBR is a polymer base obtained by means of a polymerization process in emulsion with an average molecular weight ranging respectively between 800-1500x10³ and 500-900x10³, with a styrene content of between 20 and 45% and utilized with an oil content of between 0 and 30%;

S-SBR is a polymer base obtained by means of a polymerization process in solution with an average molecular weight ranging respectively between 800-1500x10³ and 500-900x10³, with a styrene content of between 20 and 45%.

The silica utilized is marketed under the name VN3 by the EVONIK company and has a surface area of about 170 m²/g; The silane binder utilized is marketed under the name SI75 by the EVONIK company;
TMQ is the acronym for poly(1,2-dihydro-2,2,4-trimethylquinoline) and is used as an antioxidant
DPG is the acronym for the compound diphenylguanidine and is used as a vulcanization accelerant;
MBTS is the acronym for the compound Mercaptobenzothiazole disulfide and is used as a vulcanization accelerant;
TBBS is the acronym for N-tert-butyl-2-benzothiazylsulfenamide and is used as a vulcanization accelerant;
The non-functionalized lignin utilized is marketed by Sigma Aldrich under the name of Alkali Lignin.

The compounds shown in Table I were subjected to a viscosity measurement and, once vulcanized, to a measurement of the rolling resistance, of the silica dispersion index and of the abrasion resistance. In particular, the rolling resistance and the silica
dispersion are derived from the dynamic properties of the compound. In fact, the rolling resistance parameter is related to the values of tan δ at 60°C: the lower the tanδ value at 60°C, the better the resulting rolling resistance; the dispersion index is given by the ratio 100 x E' /E' _{0.1%strain}, wherein E' is given by the difference E'_{0.1%strain}-E'_{4.0%strain}. The lower the dispersion index, the better the resulting dispersion of the silica within the polymeric matrix.

The viscosity was measured according to the ASTM 1646 standard, the dynamic properties were measured according to the ASTM D5992 standard and the abrasion resistance was measured according to the DIN 53516 standard.

Table II shows the values of the above measurements in indexed form to the values for the comparison Compound A.

**TABLE II**

| | A | B | C |
|---|---|---|---|
| Viscosity | 100 | 95 | 100 |
| Dispersion index | 100 | 100 | 91 |
| Rolling resistance | 100 | 100 | 96 |
| Abrasion resistance | 100 | 100 | 105 |

For a more correct evaluation of the values shown in Table II, it should be specified that for the parameters of viscosity, dispersion index and rolling resistance, the lower the corresponding values, the more preferable they are; while, for the abrasion resistance parameter the higher the corresponding values, the more preferable they are.

From the values shown in Table II it is evident that the presence of functionalized lignin according to the present invention can impart better silica dispersion to the compound, resulting in a better rolling resistance and a better abrasion resistance.

It is also important to note that non-functionalized lignin cannot confer a dispersion of the silica as is instead guaranteed by the presence of functionalized lignin.

## Claims

1. Lignin having a plurality of functionalizations of the general formula I 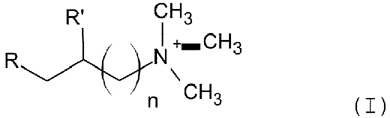
wherein R and R' are different from each other and selected between -OH and -OArLig and
n is an integer between 1 and 6.

2. Use of functionalized lignin of the general formula I as defined in claim 1 as a dispersing agent within rubber compounds for the production of pneumatic tyre parts

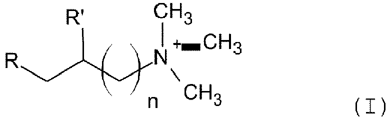

3. Use of functionalized lignin according to claim 2, **characterized in that** R is -OArLig and R' is -OH.

4. Use of functionalized lignin according to claim 2 or 3, **characterized in that** n is between 1 and 5.

5. Use of functionalized lignin according to one of the claims from 2 to 4, **characterized in that** said functionalized lignin is derived from Kraft lignin.

## Patentansprüche

1. Lignin mit einer Vielzahl von Funktionalisierungen der allgemeinen Formel I 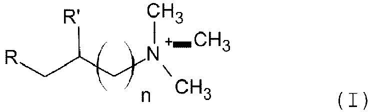
wobei R und R' voneinander verschieden und zwischen -OH und -OArLig ausgewählt sind und
n eine ganze Zahl zwischen 1 und 6 ist.

2. Verwendung von funktionalisiertem Lignin der allgemeinen Formel I wie in Anspruch 1 definiert als ein Dispergiermittel in Gummimischungen für die Herstellung von Luftreifenteilen

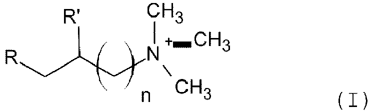

3. Verwendung von funktionalisiertem Lignin nach Anspruch 2, **dadurch gekennzeichnet, dass** R -OArLig ist und R' -OH ist.

4. Verwendung von funktionalisiertem Lignin nach Anspruch 2 oder 3, **dadurch gekennzeichnet, dass** n zwischen 1 und 5 beträgt.

5. Verwendung von funktionalisiertem Lignin nach einem der Ansprüche 2 bis 4, **dadurch gekennzeichnet, dass** das funktionalisierte Lignin von Kraft-Lignin abgeleitet ist.

## Revendications

1. Lignine ayant une pluralité de fonctionnalisations de la formule générale I 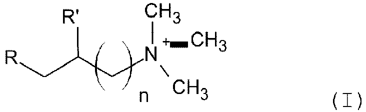
dans laquelle R et R' sont différents l'un de l'autre et choisis entre -OH et -OArLig et
n est un nombre entier entre 1 et 6.

2. Utilisation de lignine fonctionnalisée de la formule générale I telle que définie dans la revendication 1 en tant qu'agent de dispersion au sein de composés de caoutchouc pour la production de parties de pneumatique

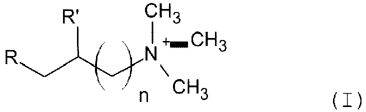

3. Utilisation de lignine fonctionnalisée selon la revendication 2, **caractérisée en ce que** R est -OArLig et R' est -OH.

4. Utilisation de lignine fonctionnalisée selon la revendication 2 ou 3, **caractérisée en ce que** n est compris entre 1 et 5.

5. Utilisation de lignine fonctionnalisée selon l'une des revendications de 2 à 4, **caractérisée en ce que** ladite lignine fonctionnalisée est dérivée de lignine Kraft.
